# DEMANDE DE BREVET EUROPEEN

(11) **EP 0 604 269 A1**
(43) Date de publication de la demande: **29.06.1994**
(21) Numéro de dépôt: 93403024.8
(22) Date de dépôt: 14.12.1993
(51) Int. Cl.: G02B 27/30, G02B 17/06, G02B 17/08, G02B 23/10

(54) **Collimateur grand champ multispectral de contrôle de distorsion d'objectif**

(30) Priorité: 21.12.1992 FR 9215388
(71) Demandeur: THOMSON-CSF, 75008 Paris (FR)
(72) Inventeur: Rabault, Denis, F-92402 Courbevoie Cedex (FR); Rollin, Joel, F-92402 Courbevoie Cedex (FR)
(74) Mandataire: Lincot, Georges

(57) **Abrégé**

Le collimateur selon l'invention permet de contrôler la distorsion d'objectifs sans utiliser de mécanique d'orientation délicat à mettre en oeuvre et sans nécessiter de calibration préalable. La réalisation préférée repose sur l'utilisation d'un miroir sphérique (2) de collimation conjugué à une mire de référence (3) le miroir (2) et la mire (3) étant de ..... autour d'une pupille de sortie (5). Une source lumineuse (4) éclaire la mire 3 disposée sur une surface image du miroir (2) confondue avec la face d'une lentille support (6).

Les sources lumineuses secondaires (S1, S2, S3) de la mire (3) forment des faisceaux (F1, F2, F3) qui sont collimatés par réflexion sur le miroir (2) après réflexion sur une lame semi-réfléchissante (1). Les faisceaux collimatés dont les rayons moyens sont normaux aux surfaces courbes de la mire (3) et du miroir (2) traversent la lame (1) et sortent alors sans distorsion par la pupille (5) située au centre de courbure (0) du miroir (2).

Application au contrôle de la distorsion d'objectifs de caméra, notamment de caméras infrarouges.

## Description

Le domaine de l'invention est le contrôle de la distorsion optique de systèmes d'imagerie, et plus particulièrement la distorsion d'objectifs de caméras travaillant dans des bandes spectrales variées allant du visible à l'infrarouge. L'invention s'applique en fait à tout type d'objectifs, de la lentille mince à des systèmes complexes comportant plusieurs groupes distincts de lentilles, par exemple des zooms.

L'invention a pour objet un collimateur grand champ multispectral destiné au contrôle de la distorsion de tels objectifs.

Les méthodes connues pour mesurer les distorsions d'objectifs peuvent être classées en deux catégories :
- d'une part les systèmes utilisant un collimateur formant un faisceau parallèle à partir d'une source de lumière et d'une lentille de collimation ; collimateur étant associé à un système d'orientation de l'objectif à tester en fonction de l'angle de champ, la mesure se fait en relevant dans le plan focal de l'objectif à tester la position d'un spot formé par l'objectif à partir d'un faisceau incident provenant du collimateur ; un support mobile en rotation porte l'objectif à tester et un système de détection (caméra, ...) repère la position du spot disposé dans le plan focal de l'objectif. Les valeurs de distorsion sont alors obtenues en comparant les valeurs de position obtenues à celles données, en fonction de l'angle de champ ϑ et de la distance focale f de l'objectif, par la loi théorique y = f x tg ϑ. Ces systèmes permettent de tester des optiques grand champ mais sont limités par la course de la mécanique d'orientation angulaire. De plus, ils sont encombrants et difficiles à mettre en oeuvre car ils nécessitent un mécanisme de haute précision pour l'orientation de l'ensemble à tester ;
- une autre méthode de mesure des distorsions d'objectifs consiste à utiliser un collimateur grand champ, préalablement étalonné en distorsion, au foyer duquel est placé une mire composée d'une grille de trous. Les valeurs de distorsion sont obtenues en mesurant la position de l'image de ces trous au foyer de l'objectif à tester, et en comparant ces valeurs aux valeurs théoriques, en tenant compte de la distorsion propre du collimateur de test. Le problème de ce type de systèmes est qu'il nécessite une calibration en distorsion, précise et différente suivant la bande spectrale utilisée.

Le collimateur sans distorsion selon l'invention permet d'échapper aux inconvénients de l'art antérieur: il est simple et facile à mettre en oeuvre, sans nécessiter de systèmes d'orientation mécanique ni de calibration en distorsion. De plus, le collimateur selon l'invention permet de contrôler la distorsion d'objectifs grand champ utilisés habituellement dans une gamme de longueurs d'onde appartenant à un domaine spectral large, allant du visible à l'infrarouge.

Pour atteindre ces objectifs, l'invention repose sur la mise en oeuvre d'éléments conjugués optiquement présentant une symétrie de révolution autour de la pupille, de sorte que les rayons moyens des faisceaux restent normaux à la surface de ces éléments quelle que soit la direction du faisceau. L'utilisation d'un miroir sphérique conjuguée à une mire disposée sur la surface focale du miroir constituent la base d'une forme de réalisation préférée de l'invention.

Le collimateur forme ainsi directement des faisceaux sans distorsion dans différentes directions de tout le champ qu'il embrasse, ce qui permet de s'affranchir de partie mobile.

Plus précisément, l'invention concerne un collimateur grand champ multispectral de contrôle de distorsion d'objectif, comportant une mire de référence et une source d'illumination, pour éclairer la mire et former, dans une pupille de sortie, par passage sur des moyens optiques adaptés, des faisceaux collimatés dans des directions balayant un grand champ, caractérisé en ce que lesdits moyens optiques comportent une lame semi-réfléchissante conjuguée à un miroir sphérique, en ce que la mire de référence est disposée sur une surface image du miroir sphérique, et la pupille au centre de courbure du miroir sphérique et en ce que les faisceaux sont collimatés par réflexion sur le miroir sphérique avant de traverser la lame semi-réfléchissante.

La mire du collimateur selon l'invention peut être gravée sur une lentille pour permettre l'utilisation d'une source d'étendue réduite et pour uniformiser les caractéristiques optiques des faisceaux collimatés.

L'architecture du collimateur est organisée pour faire travailler les éléments dioptriques en faisceaux parallèles pour s'affranchir de tout achromatisme.

Ces éléments dioptriques sont avantageusement en ZnSe afin de conserver la caractéristique de mutispectralité la plus large possible. Cette caractéristique est en particulier exploitée pour mesurer la distorsion résiduelle en lumière visible. Cette distorsion est rendue négligeable du fait de la conception même du collimateur et mesure en fait la qualité de surface des éléments utilisés.

Pour contrôler la distorsion de tout type d'objectif, la courbure du miroir est calculée pour amener la pupille sensiblement en avant du collimateur et l'aberration sphérique peut être corrigée pour permettre le contrôle d'objectifs de pupilles d'entrée importantes.

D'autres caractéristiques et avantages apparaîtront à a lecture de la description qui suit, relative à un mode de réalisation préférée de l'invention accompagné des figures annexées, qui représentent :
- la figure 1, un exemple schématique de collimateur selon l'invention ;
- la figure 2, la projection de faisceaux collimatés sur un miroir sphérique et focalisation sur une surface image ;
- la figure 3, la mise en oeuvre d'une lentille de correction d'aberration sphérique.

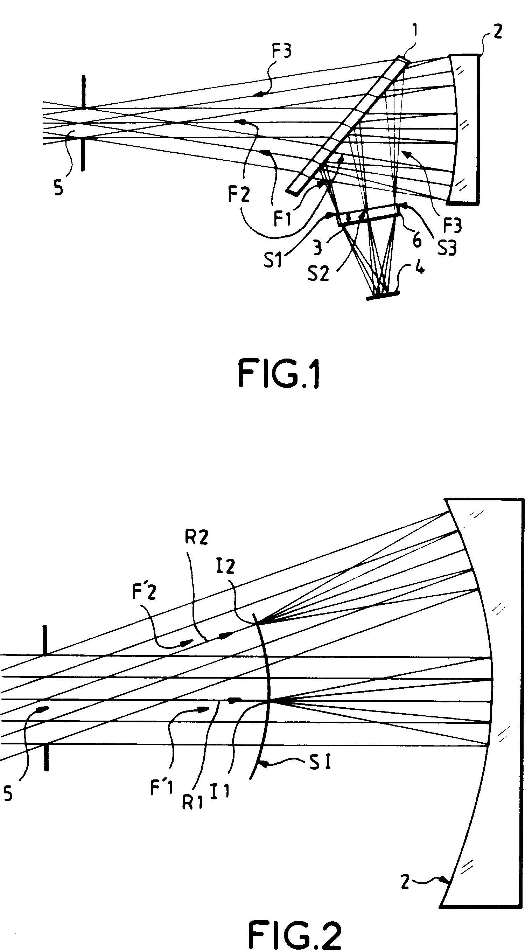

Comme illustré sur la figure 1, un exemple schématisé de collimateur caractérisé selon l'invention comporte une lame semi-réfléchissante 1, un miroir sphérique de focalisation 2, une mire de référence 3 formé d'une grille à trous qui, éclairés, servent de sources lumineuses, une source d'illumination 4 et une pupille de sortie 5.

La source lumineuse 4 éclaire la mire 3 qui fournit autant de sources lumineuses secondaires, telles que S1, S2, S3, qu'elle possède de trous. Les faisceaux issus de ces sources, tels que F1, F2, F3, sont réfléchis par la lame 1 sur le miroir sphérique 2. Par réflexion sur le miroir 2, les faisceaux F1, F2, F3 sont rendus parallèles et dirigés vers la pupille de sortie 5 après avoir traversé la lame 1.

Pour obtenir un collimateur sans distorsion, la pupille de sortie 5 est positionnée au centre de courbure 0 du miroir 2. Dans ces conditions, le miroir sphérique est même dépourvu de toutes les aberrations, hormis l'aberration sphérique. En effet, comme représenté sur la figure 2, la formation d'images ponctuelles, telles que I1 et I2, se fait de manière identique en tout point du champ, lorsque ces images sont obtenues par réflexion sur un miroir sphérique 2' de faisceaux rigoureusement collimatés, tels que F'1 et F'2, passant par une pupille d'entrée 5' située au centre 0 du miroir. Ces images sont formées sur une surface image SI de courbure sphérique, centrée en 0. Un tel résultat est obtenu par le fait que le rayon moyen de ces faisceaux, tel que R1 ou R2, est normal au miroir quel que soit le champ.

Cette propriété classique est exploitée dans l'invention en mettant en oeuvre le miroir sphérique 2 en parcours lumineux inversé par rapport au sens utilisé en référence à la figure 2 du fait que les surfaces du miroir 2 sont de révolution autour de la pupille 5, de la même manière que la surface du miroir 2' et la surface image SI sont de révolution autour du centre de la pupille 5'.

Ainsi dans l'exemple de réalisation illustré à la figure 1, la mire 3 est gravée sur un substrat possédant une surface de même courbure que celle de la surface image SI de sorte que les faisceaux, provenant de la mire 3, tels que F'1, F'2, F'3, sont parfaitement collimatés au niveau de la pupille 5. De manière à réduire la surface de la source lumineuse 4, placée derrière la mire 3, il est avantageux de graver celle-ci sur une lentille 6 qui permet de concentrer et d'uniformiser les caractéristiques optiques des différents faisceaux. Il est alors possible d'utiliser comme mire des corps noirs de petites dimensions pour les applications en lumière infrarouge, ou des sources quasi ponctuelles pour les applications en lumière visible ou proche infrarouge.

Les caractéristiques de multispectralité et d'achromatisme résultent des matériaux et de l'architecture optique mis en oeuvre.

L'utilisation d'un miroir et d'un matériau transparent aux radiations visibles et infrarouges pour les éléments dioptriques, par exemple le ZnSe, permet d'obtenir une caractéristique de multispectralité sur un large domaine spectral. Pour utiliser ce collimateur dans différentes bandes spectrales, il suffit de choisir une source adaptée à chaque bande spectrale par exemple visible, proche infrarouge, infrarouge.

De plus, l'utilisation d'un miroir comme optique de focalisation permet de conserver la qualité optique de l'ensemble quelle que soit la longueur d'onde d'utilisation.

Par ailleurs, la lame semi-réfléchissante 1 n'introduit pas de chromatisme car elle est utilisée en faisceaux parallèles. La lentille 6 quant à elle ne participe pas à la formation de l'image de la mire, si bien que son chromatisme n'intervient pas.

Du fait de la caractéristique de multispectralité, le contrôle d'une distorsion résiduelle inhérente, due à l'écart entre les caractéristiques optiques théoriques et réelles des éléments utilisés, est particulièrement simple car il peut être effectué dans le visible. Pour ce faire, un théodolite est placé dans de la pupille 5 du collimateur et l'image de différents points de la mire est pointée par ce théodolite.

Le contrôle de la distorsion d'un objectif, par exemple d'un objectif de caméra, est favorisé du fait que le collimateur selon l'invention possède une pupille réelle 5 positionnée à une distance assez importante relativement aux autres éléments du système. Ceci est rendu possible du fait des caractéristiques de courbure du miroir sphérique. Cette pupille est alors confondue avec la pupille d'entrée de l'objectif à tester pour procéder au contrôle. Or la majeure partie des objectifs ont une pupille d'entrée virtuelle, dès lors que les champs qu'ils prospectent sont d'étendue suffisante (par exemple supérieur à ± 10°). Le fait que la pupille du collimateur soit réelle et dégagée vers l'avant, permet de tester une gamme variée d'objectifs.

En particulier, le collimateur selon l'invention est bien adapté pour contrôler efficacement les objectifs de caméra, notamment de caméra infrarouge. La mire de référence, focalisée sur le détecteur de la caméra, est alors contrôlée par incrustation sur un moniteur de visualisation couplé à la caméra et qui visualise également une mire théorique. Les tolérances de distorsion admises correspondent à l'épaisseur des traits de la mire théorique, et tout décalage au-delà de cette épaisseur peut être mesurée ou enregistrée par des moyens classiques bien connus de l'Homme de l'Art.

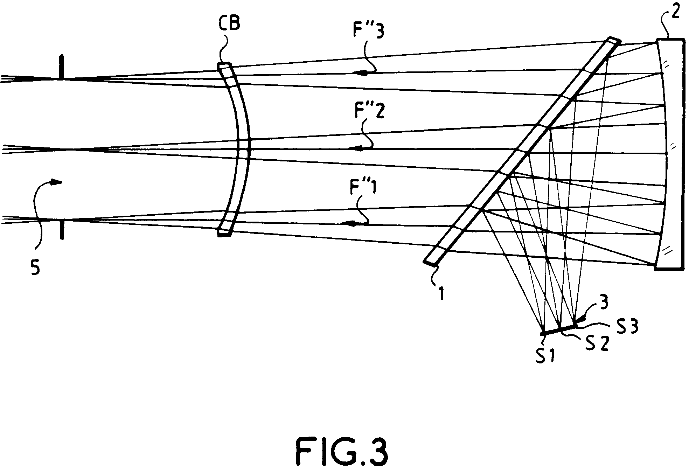

L'invention n'est pas limitée à l'exemple de réalisation décrit et représenté. Le collimateur décrit est particulièrement bien adapté aux objectifs possédant une petite pupille (typiquement inférieure à 50 mm) car sa qualité optique est alors indépendante de l'aberration sphérique du miroir. Mais il peut être adapté pour fonctionner avec des objectifs possédant des pupilles nettement plus importantes, en ajoutant simplement un correcteur de Bouwers, qui compense l'aberration sphérique du miroir. La figure 3 illustre l'implantation d'une telle lentille de correction CB entre la pupille de sortie 5 et la lame 1 du collimateur précédemment décrit. Sur la figure 3, les éléments déjà décrits sont désignés par les mêmes références et trois faisceaux F''1, F''2 et F''3, sont présentés pour illustrer la collimation de faisceaux à partir de trois sources S1, S2 et S3 provenant de la mire 3. Pour que le collimateur conserve sa caractéristique fondamentale d'absence de distorsion, les surfaces 31 et 32 du correcteur CB de révolution par rapport au centre de la pupille 5.

Cette adaptation permet d'étendre les possibilités d'utilisation du collimateur. Toutefois, une faible partie de son application multispectrale est perdue car le compensateur étant dioptrique, le chromatisme entre les différentes bandes spectrales peut dégrader suffisamment la qualité optique et rendre certaines bandes spectrales inutilisables. En particulier, si le système est conçu pour travailler jusque dans la bande 8-12 µm, il reste utilisable uniquement dans la bande 3-5 µm. Par contre, le contrôle dans le visible reste toujours possible car il peut se faire à ouverture réduite et est donc quasiment sensible au chromatisme. Ainsi la majeure partie du domaine multispectral d'application est conservée.

Le matériau utilisé pour les éléments dioptriques est préférentiellement le ZnSe, mais d'autres matériaux à transmission multispectrale peuvent convenir (ZnS, Saphir, Nacl,...).

## Revendications

**1** **-** Collimateur grand champ multispectral de contrôle de distorsion d'objectif, comportant une mire de référence (3) et une source d'illumination (4) pour éclairer la mire (3) et former dans une pupille de sortie (5), par passage sur des moyens optiques adaptés, des faisceaux collimatés (F1, F2, F3) dans des directions balayant un grand champ, caractérisé en ce que les moyens optiques comportent une lame semi-transparente (1) conjuguée à un miroir sphérique (2), en ce que la mire de référence (3) est disposée sur une surface focale image (SI) du miroir sphérique (2) et la pupille (5) sensiblement au centre de courbure (0) du miroir sphérique, et en ce que les faisceaux (F1, F2, F3) sont collimatés par réflexion sur le miroir sphérique (2) avant de traverser la lame semi-réfléchissante (1).

**2** **-** Collimateur selon la revendication 1, caractérisé en ce que la mire (3) est gravée sur la surface d'une lentille (6) de courbure sphérique identique à celle de la surface image (SI) du miroir (2) et concentrant les faisceaux lumineux issus de la source (4).

**3** **-** Collimateur selon la revendication 1 ou 2, caractérisé en ce que la lame semi-réfléchissante (1) et la lentille (6) sont en matériau multispectral, et en ce que la source d'illumination (4) émet dans une bande spectrale appartenant à un domaine spectral allant du visible à l'infrarouge.

**4** **-** Collimateur selon l'une des revendications précédentes caractérisé en ce qu'un contrôle de distorsion résiduel est réalisé en lumière visible en disposant un théodolite dans le plan de la pupille de sortie (5) pour pointer une image des différentes sources (S1, S2, S3) de la mire (3).

**5** **-** Collimateur selon l'une des revendications précédentes, caractérisé en ce que la pupille de sortie (5) est une pupille réelle positionnée à une distance éloignée des autres éléments optiques (1 à 3) du collimateur du fait des caractéristiques de courbure du miroir sphérique (2).

**6** **-** Collimateur selon l'une des revendications précédentes, caractérisé en ce qu'il comporte, en outre, un correcteur de Bouwers (CB) entre la lame (1) et la pupille (5) pour compenser l'aberration sphérique des faisceaux due à la sphéricité du miroir (2) et augmenter la dimension de la pupille de sortie (5) afin de contrôler des objectifs de pupilles d'ouverture supérieure à 50 mm.
